# EUROPÄISCHE PATENTANMELDUNG

(11) **EP 3 932 736 A1**
(43) Veröffentlichungstag der Anmeldung: **05.01.2022**
(21) Anmeldenummer: 20182994.2
(22) Anmeldetag: 29.06.2020
(51) Int. Cl.: B60P 1/43, B60P 3/12, B60P 3/14, B65D 88/12, B65D 88/54, B65D 90/00

(54) **TRANSPORTVORRICHTUNG FÜR KRAFTFAHRZEUGE**

(71) Anmelder: Firebox Swiss AG, 3008 Bern (CH)
(72) Erfinder: SCHÖPFER, Hans, 5036 Oberentfelden (DE); KREBS, Andreas, 3008 Bern (DE)
(74) Vertreter: AMMANN PATENTANWÄLTE AG

(57) **Zusammenfassung**

Eine Transportvorrichtung (1) umfasst einen Behälter (2), bevorzugt einen Frachtcontainer, dessen Seitenwand (3) geöffnet werden kann. An der Seitenwand herausfahrbar ist eine Verschiebungseinrichtung (9, 11) angeordnet. Im ausgefahrenen Zustand und bei geöffneter Seitenwand kann ein (defektes) Fahrzeug (25) auf die Verschiebungseinrichtung (9, 11) abgesetzt werden. Durch Einziehen der Verschiebeinrichtung (9, 11) kann das Fahrzeug (25) im Wesentlichen in Richtung seiner Achsen in den Behälter (2) verschoben werden.

## Beschreibung

Die vorliegende Erfindung betrifft eine Transportvorrichtung für Kraftfahrzeuge gemäss Oberbegriff des Anspruchs 1. Des Weiteren betrifft sie ein Fahrzeug mit einer solchen Transportvorrichtung.

Mit dem Aufkommen von Kraftfahrzeugen mit elektrischem Antrieb stellen sich neue Probleme beim Transport dieser Fahrzeuge im defekten Zustand. Insbesondere enthält der eingebaute Akkumulator in geladenem Zustand eine beträchtliche Energiemenge, die bei einem Kurzschluss eine hohe Brandgefahr darstellt. Dazu kommt, dass spezielle Löschmittel nötig sind, um einen solchen Brand effizient zu löschen.

Gleich gelagerte Probleme können beim Transport von Luftfahrzeugen auftreten, insbesondere bei Leichtflugzeugen, die in jüngerer Zeit auch mit Elektroantrieb ausgestattet werden.

Bei herkömmlichen Abschleppfahrzeugen wird das beschädigte Fahrzeug offen auf der Ladefläche transportiert. Gerät dabei ein elektrisches Kraftfahrzeug in Brand, so muss der Transport abgebrochen und es muss gewartet werden, bis Löschkräfte vor Ort sind. Für einen sicheren Transport von Elektrofahrzeugen wird daher vorgeschlagen, diese in einem Container zu transportieren, zum Beispiel in der EP-A-3 263 402. Zum Beladen und Entladen des Containers wird vorgeschlagen, das Fahrzeug in Längsrichtung, d.h. rollend auf seinen Rädern, in den Container hineinzuziehen. Dazu ist der Container vor oder hinter dem Fahrzeug abzustellen. Oft ist diese Platzierung des Containers jedoch problematisch, da hierfür nicht nur in Längsrichtung des defekten Fahrzeugs Platz für den noch längeren Container vorhanden sein muss, sondern auch noch Raum für das Rangieren des Transportfahrzeugs, da der Container vor dem Fahrzeug abgestellt werden muss.

Eine Aufgabe der vorliegenden Erfindung besteht daher darin, einen Transportbehälter für Kraftfahrzeuge anzugeben, in den das Fahrzeug auf eine einfachere Art bewegbar ist.

Eine solche Transportvorrichtung ist im Anspruch 1 angegeben. Die weiteren Ansprüche geben bevorzugte Ausführungsformen und ein Transportfahrzeug mit einer solchen Transportvorrichtung an.

Demgemäss wird vorgeschlagen, das defekte Fahrzeug nicht in den Behälter hineinrollen zu lassen, sondern es quer in den Behälter hinein zu befördern, also im Wesentlichen beim Be- und Entladen der Transportvorrichtung das defekte Fahrzeug in Richtung seiner Achsen und damit quer zu seiner üblichen Fortbewegungsrichtung zu bewegen. Dazu wird der Behälter der Transportvorrichtung mit einer Verschiebungseinrichtung ausgestattet, die so weit aus dem Behälter heraussteht, dass das defekte Fahrzeug mit einer Hebevorrichtung darauf abgestellt werden kann. Durch Einziehen der Verschiebungseinrichtung wird das Fahrzeug in den Behälter bewegt.

In einer bevorzugten Ausführung wird ausgenutzt, dass das Kraftfahrzeug durch die Hebevorrichtung, z. B. einen Kran, beim Absetzen auf die Verschiebungseinrichtung bereits zu einem grossen Teil im Behälter positioniert abgestellt werden kann. Dieser Teil beträgt in der Praxis ein Drittel bis fast die Hälfte der Fahrzeugbreite. Zusammen mit dem Eigengewicht des Transportbehälters liegt damit der Schwerpunkt der Transportvorrichtung inklusive defektem Fahrzeug noch innerhalb der Standfläche, so dass das Aufsetzen des defekten Fahrzeuges zum Beispiel erfolgen kann, wenn die Transportvorrichtung lose auf der Ladefläche eines Fahrzeugs steht.

Gemäss einem anderen, bevorzugten Aspekt der Erfindung wird die Eigenschaft ausgenutzt, dass die Elemente der Verschiebungseinrichtung sich auch im vollausgefahrenen Zustand noch zu einem grossen Teil innerhalb des Behälters befinden, insbesondere von Führungen gehalten werden. Dadurch ergeben sich erhebliche mechanische Vorteile in der Führung der beweglichen Teile der Verschiebungseinrichtung und auch für den Aktuator, bevorzugt einen oder mehrere Hydraulikzylinder.

Die Erfindung wird weiter an einem bevorzugten Ausführungsbeispiel unter Bezugnahme auf Figuren erläutert. Es zeigen:

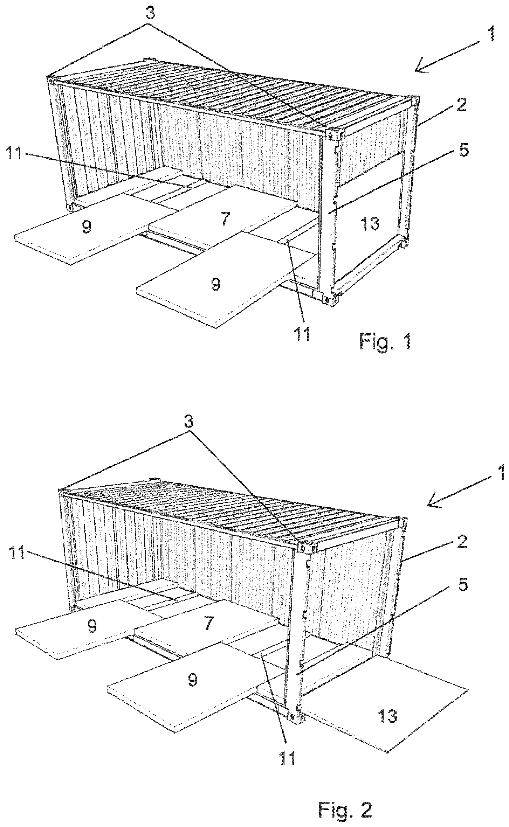

- Figur 1:: Gesamtansicht einer Transportvorrichtung mit ausgefahrener Verschiebungseinrichtung.
- Figur 2:: Gesamtansicht analog Figur 1 mit geöffneter Schmalseite.
- Figur 3:: Vergrösserter schematisierter Detailschnitt durch eine Führung der Verschiebungseinrichtung.
- Figur 4:: Darstellung der Situation beim Aufladen eines Fahrzeuges.

Das Grundelement einer Transportvorrichtung 1 ist ein üblicher Frachtcontainer 2. Der Frachtcontainer 2 ist an seiner Längsseite 3 mit Türen (nicht dargestellt) versehen, die es gestatten, die Längsseite 3 zu öffnen, und zwar wenigstens soweit, dass ein Fahrzeug über die Längsseite 3 in den Container 2 hineinbewegt werden kann. Üblicherweise sind die Türen in den Ecksäulen 5 so gelagert, dass sie, oft in 2 oder mehr Segmenten zusammengefaltet, um 180° nach aussen geschwenkt werden können. Grundsätzlich spielt die Art der Türen oder Läden zum Öffnen der Längsseite 3 jedoch für die vorliegende Erfindung keine Rolle.

Im Boden 7 sind verschiebbar die Auszüge 9 angeordnet. Die Auszüge 9 sind im Wesentlichen plattenförmig und in einem Abstand voneinander gemäss dem üblichen Achsabstand von Fahrzeugen angeordnet. Sie werden durch Hydraulikzylinder 11 in die dargestellte Position aus dem Container 2 hinausbewegt und auch in ihn hineingezogen.

Als weitere Zugangsmöglichkeit kann der Container auch an der Schmalseite mit einer ausklappbaren Rampe 13 versehen sein.

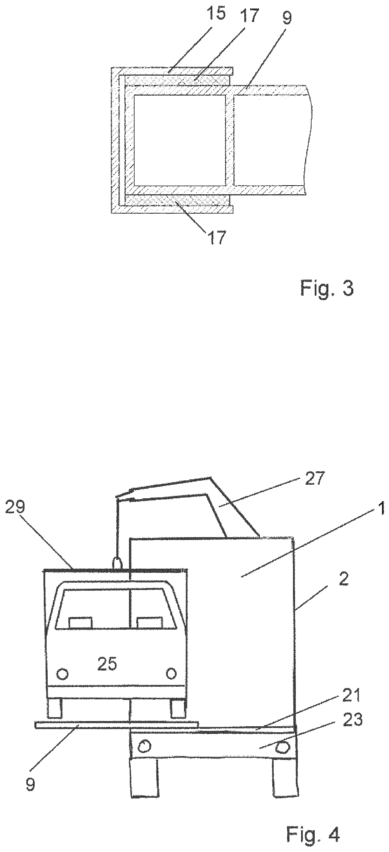

Die Auszüge 9 sind in den C-Profilen 15 geführt (siehe Figur 3). Die C-Profile 15 können im Boden 7 integriert sein oder auf andere Art am Boden des Containers 2 befestigt sein. Insbesondere können die Führungen in den Boden des Containers integriert sein, so dass im Ruhezustand der Verschiebungseinrichtung (9, 11) (eingezogen) der Boden des Containers eine durchgehende Fläche bildet. Für ein reibungsarmes Gleiten der Auszüge 9 sind die Innenseiten des C-Profils oben und unten mit Kunststoff 17 (z. B. PTFE (Teflon^{®})) belegt. Derartige Führungen sind an sich bekannt von ausfahrbaren Rampen bei Abschleppfahrzeugen.

Vorteile der Erfindung werden aus der Situationsskizze der Figur 4 während des Ein- oder Ausladens deutlich. Auf der Ladefläche 21 eines Transportfahrzeugs 23 befindet sich ein Behälter 2 der Transportvorrichtung 1. Das Transportfahrzeug ist neben das defekte Kraftfahrzeug 25 gefahren. Es leuchtet ein, dass das Positionieren des Transportfahrzeugs 23 neben einem defekten Fahrzeug 25 einfacher ist als vor oder hinter einem Fahrzeug 25, insbesondere noch auf eine Art, dass dieses in einen Behälter hineingezogen werden kann, wozu der Behälter vor dem aufzuladenden Fahrzeug abgestellt werden muss. Ausserdem besteht eine weitere Freiheit dadurch, dass sich das Fahrzeug 25 nur im Arbeitsbereich des Krans 27 befinden muss. Hinsichtlich der Belastbarkeit des Krans 27 beziehungsweise der Sicherung des Fahrzeugs 23 gegen Kippen ist es vorteilhaft, wenn das Fahrzeug 23 möglichst nahe neben dem Fahrzeug 25 abgestellt werden kann. Ein anderer Vorteil ergibt sich daraus, dass mit dem Kran 27 das Fahrzeug 25 auch von einer Position vor dem Fahrzeug 23 oder sogar auf der in der Figur rechten Seite über den Container 2 hinweg auf die Auszüge 9 gestellt werden kann. Bei engen Platzverhältnissen oder auch grundsätzlich bietet es sich an, die Auszüge 9 erst auszufahren, wenn das Fahrzeug 25 über die Auszüge 9 hinweg angehoben worden ist, so dass sich das Fahrzeug 25 vor dem Anheben in geringem seitlichen Abstand links vom Transportfahrzeug 23 befinden kann.

Mit dem Kran 27 wird das Fahrzeug 25 mittels eines Hebegeschirrs 29 angehoben und auf die ausgefahrenen Auszüge 9 abgesetzt. Dabei befindet sich der Schwerpunkt des Fahrzeugs 25 nur knapp ausserhalb des Behälters 2. Zusammen mit dem Gewicht des Behälters 2 liegt damit der Gesamtschwerpunkt der Transportvorrichtung 1 sicher innerhalb der Ladefläche 21.

Konkret hat ein Frachtcontainer ein Gewicht von 2 bis 4t. Die Auszüge haben zum Beispiel eine Gesamtlänge von 2,5 m und fahren bis zu 1,6 m aus, wonach noch 80 bis 90 cm innerhalb des Behälters 2 und in den Führungen 15 bleiben. Angesichts eines üblichen Fahrzeuggewichts für Personenkraftfahrzeuge von 1 bis 3,5 t besteht damit keine Gefahr, dass der Behälter 2 beim Aufladen von der Ladefläche 21 kippen könnte.

Danach wird der Kran 27 abgesenkt und die Auszüge 9 werden mittels der Aktuatoren in Form von Hydraulikzylindern 11 in den Behälter 2 hineingefahren. Der Container 2 wird geschlossen und das Fahrzeug 25 abtransportiert.

Im Container 2 sind zusätzlich (nicht dargestellt) Überwachungsmittel, insbesondere ein Brandmelder vorhanden, um den Fahrer des Transportfahrzeugs 23 auf einen Brand hinzuweisen. Für die Brandbekämpfung kann weiterhin eine Anlage vorhanden sein, um ein geeignetes Löschmittel freizusetzen. Insbesondere bei Elektrofahrzeugen bietet sich ein Löschaerosol an. Derartige Warnanlagen und Löscheinrichtungen sind an sich bekannt und bedürfen daher keiner weiteren Erläuterung.

Die beschriebene Transportvorrichtung eignet sich nicht nur zum Transport, sondern auch Lagerung eines Fahrzeugs in "Quarantäne". Z. B. kann es nötig sein, eine Elektrofahrzeug nach dem Transport noch eine gewisse Zeit, z.B. bis zu 3 Tagen (72 h), unter Überwachung auf Feuerentwicklung zu lagern. Z. B. kann aus dem Fahrzeugzustand abgeleitet werden, dass die Batterie beschädigt ist. Der Schaden kann durch Vibration und Rütteln während des Transports verstärkt werden, so dass ein Brand erst mehrere Stunden später ausbricht. Eine andere Situation liegt vor, wenn ein Brand an einem Fahrzeug, das sich schon in der Transportvorrichtung befinden kann, mit Wasser gelöscht wurde. Nach Ablassen des Wassers ist oft wieder einige Zeit zu warten, ob sich die Batterie entzündet. Wenigstens ist oft zu warten, bis das Wasser entfernt werden kann, wenn Sicherheitsbestimmungen es untersagen, den Transport durchzuführen, solange sich Löschwasser im Behälter der Transportvorrichtung befindet.

Aus der vorangehenden Beschreibung eines Ausführungsbeispiels sind dem Fachmann zahlreiche Erweiterungen und Abwandlungen zugänglich, ohne den Schutzbereich der Erfindung zu verlassen, der durch die Ansprüche definiert ist. Denkbar ist unter anderem:
- Verwendung eines anderen Behälters als einem üblichen Frachtcontainer.
- Die Auszüge 9 können zusammen mit den Führungen 15 in Längsrichtung im Container 2 verschiebbar sein, um an verschiedene Achsabstände der beschädigten Fahrzeuge 25 angepasst werden zu können.
- Die Auszüge sind durch Rollen geführt statt gleitend. Mit Rollenlagern ergibt sich jedoch in der Regel eine grössere Höhe der Verschiebungseinrichtung.
- Verwendung der Transportvorrichtung für das Transportieren oder Lagern von anderen Fahrzeugen als landgebundene Kraftfahrzeuge, nämlich Luftfahrzeuge. Als solche kommen beispielsweise in Betracht Leichtflugzeuge, insbesondere Leichtflugzeuge mit Elektroantrieb.

## Patentansprüche

1. Transportvorrichtung (1) für Kraftfahrzeuge (25), insbesondere für Kraftfahrzeuge mit mehr als einer Spur und mehr als einer Achse, bevorzugt Fahrzeuge mit elektrischem Antrieb und einem Akkumulator als Energiequelle, wobei die Transportvorrichtung einen Behälter (3) zur Aufnahme des Kraftfahrzeugs umfasst, **dadurch gekennzeichnet, dass** der Behälter an einer Seite eingerichtet ist, geöffnet zu werden, so dass die entstandene Öffnung ausreichend ist, das Kraftfahrzeug im wesentlich in Richtung seiner Achsen in den Behälter einführen zu können, und dass eine Verschiebungseinrichtung (9, 11) vorhanden ist, die aus dem Behälter durch die Öffnung ausfahrbar ist, so dass ein Kraftfahrzeug auf die ausgefahrene Verschiebungseinrichtung aufsetzbar und durch Einfahren der Verschiebungseinrichtung in den Behälter verschiebbar ist.

2. Transportvorrichtung (1) gemäss Anspruch 1, **dadurch gekennzeichnet, dass** die Öffnung eine Länge von etwa der Gesamtlänge des Behälters (3) hat, bevorzugt eine Länge von 2 m bis 6 m aufweist.

3. Transportvorrichtung (1) gemäss einem der Ansprüche 1 bis 2, **dadurch gekennzeichnet, dass** die Verschiebungseinrichtung (9, 11) aus mindestens einem am Boden des Behälters verschiebbar angebrachten plattenförmigen Element (9) besteht.

4. Transportvorrichtung (1) gemäss Anspruch 3, **dadurch gekennzeichnet, dass** das plattenförmige Element (9) mit einem Aktuator (11) in Wirkverbindung steht, so dass es durch den Aktuator aus- und einfahrbar ist.

5. Transportvorrichtung (1) gemäss einem der Ansprüche 1 bis 4, **dadurch gekennzeichnet, dass** die Verschiebungseinrichtung ausgelegt ist, höchstens 1 m bis 1,8 m, bevorzugt höchstens 1,6 m auszufahren.

6. Transportvorrichtung (1) gemäss einem der Ansprüche 2 bis 4, **dadurch gekennzeichnet dass** das plattenförmige Element zu maximal ca. 3/4, bevorzugt maximal 2/3 seiner Länge ausfahrbar ist.

7. Transportvorrichtung (1) gemäss einem der Ansprüche 1 bis 6, **dadurch gekennzeichnet, dass** die Verschiebungseinrichtung in C-Profilen (15) verschiebbar ist und die C-Profile am Boden des Behälters (2) befestigt sind oder, damit durch Boden und Verschiebungseinrichtung eine im wesentlichen durchgehende Fläche gebildet wird, in den Boden des Behälters integriert sind.

8. Transportvorrichtung (1) gemäss einem der Ansprüche 1 bis 7, **dadurch gekennzeichnet, dass** der Aktuator (11) eine Anordnung aus mindestens einem Hydraulikzylinder ist.

9. Transportvorrichtung (1) gemäss einem der Ansprüche 1 bis 8, **dadurch gekennzeichnet, dass** der Behälter (2) mit einem Sensor für mindestens eines der folgenden Phänomen ausgestattet ist:
- Rauch; und
- erhöhte Temperatur,
um einen Brand erkennen zu können.

10. Transportvorrichtung (1) gemäss einem der Ansprüche 1 bis 9, **dadurch gekennzeichnet, dass** der Behälter (2) mit einer Feuerbekämpfungseinrichtung ausgestattet ist, insbesondere einer Feuerbekämpfungseinrichtung, die eingerichtet ist, bei Bränden, insbesondere von Batterien, weiter insbesondere von Lithiumakkumulatoren, ein brandunterdrückendes Gas freizusetzen, insbesondere Stickstoff, ein Edelgas, Kohlendioxid oder eine Mischung von mindestens zweien dieser Gase, optional in Kombination mit einem feinverteilten Feststoff als Aerosol, bevorzugt einer Kaliumverbindung und insbesondere Kaliumcarbonat (K₂CO₃).

11. Lastfahrzeug (23) zum Befördern von Kraftfahrzeugen (25) mit einer Transportvorrichtung (1) gemäss einem der Ansprüche 1 bis 10.

12. Lastfahrzeug gemäss Anspruch 11, **dadurch gekennzeichnet, dass** es mit einem Lasthebezeug (27), insbesondere einem Kran, ausgestattet ist, um ein Fahrzeug auf der ausgefahrenen Verschiebungseinrichtung (9, 11) absetzen zu können.
